(19) Europäisches Patentamt
European Patent Office
Office européen des brevets

(11) Veröffentlichungsnummer: **0 222 165**
**A2**

(12) **EUROPÄISCHE PATENTANMELDUNG**

(21) Anmeldenummer: 86113962.4

(22) Anmeldetag: 08.10.86

(51) Int. Cl.⁴: C09J 3/16 , C09K 3/10 , C09D 3/64

(30) Priorität: 08.11.85 DE 3539593

(43) Veröffentlichungstag der Anmeldung: 20.05.87 Patentblatt 87/21

(84) Benannte Vertragsstaaten: AT BE CH DE FR GB IT LI NL SE

(71) Anmelder: DYNAMIT NOBEL AKTIENGESELLSCHAFT
Postfach 1261
D-5210 Troisdorf, Bez. Köln(DE)

(72) Erfinder: Huber, Hans, Dr.
Im Korresgarten 68
D-5204 Lohmar(DE)
Erfinder: Vollkommer, Norbert, Dr.
Schumannstrasse 5
D-5210 Troisdorf-Kriegsdorf(DE)

(54) **Wärmehärtbare Klebstoff- und Dichtungsmassen.**

(57) Es werden wärmehärtbare Klebstoff-und Dichtungsmassen, bestehend aus
20 bis 60 Gew.-% carboxylgruppen-terminierten Polyestern mit vorzugsweise mindestens zwei Carboxylgruppen je Molekül mit einer Glasübergangstemperatur unterhalb 20° C,
2 bis 12 Gew.-% Polyoxazolinen, welche mindestens zwei Oxazolingruppen je Molekül enthalten,
2 bis 40 Gew.-% Acryl-oder Methacrylester, vorzugsweise mehrwertiger Alkohole, und/oder Allylester mehrwertiger Carbonsäuren,
vorgeschlagen, die vorzugsweise Peroxide oder aliphatische Azoverbindungen als Radikalbildner und ggf. Paraffin und reaktive oder nicht reaktive Verdünnungsmittel und Zuschlagstoffe enthalten können.

EP 0 222 165 A2

## Wärmehärtbare Klebstoff-und Dichtungsmassen

Die DE-OS 34 02 280 beschreibt wärmehärtbare Klebstoff-und Dichtungsmassen, bestehend aus

a) 70 bis 95 Gew.-% Polyestern, mit mindestens zwei Carboxylendgruppen und Glastemperaturen unterhalb 20° C,

b) 5 bis 30 Gew.-% Polyoxazolin, welche in den Polyestern suspendiert sind,

c) 0 bis 4 Gew.-% Paraffin und ggf. zusätzlich

d) 1 bis 50 Gew.-% reaktiven oder nicht reaktiven Verdünnungsmitteln und/oder Zuschlagstoffen.

Diese Massen haben zwar auch auf nicht entfetteten Stahloberflächen gute Haftung und gute mechanische Eigenschaften. Die Forderung des Verarbeiters nach Applizierbarkeit bei Raumtemperatur ist aber nicht erfüllt, weil die Massen halbfest oder nicht fließfähig genug sind.

Soweit aus wirtschaftlichen Gründen Füllstoffe zugesetzt werden, ist auch bei 50 bis 90° C für z.B. beheizbare Spritzpistolen die Fließfähigkeit der Klebpaste nicht ausreichend. Weiter wird von kalten Oberflächen von nicht entfetteten Stahlblechen der warme Kleber schwer "angenommen".

Auch zusetzbare, nicht reaktive Verdünnungsmittel in Mengen, die noch nicht die Eigenschaften der ausgehärteten Klebermassen beeinträchtigen, ergeben Kleber mit einer Verarbeitungstemperatur bei 50° C oder mehr.

Reaktive Verdünnungsmittel nehmen selbst an der Vernetzung teil, haben hohe Eigenviskosität und erhöhen somit nicht die Fließfähigkeit.

Es bestand daher die Aufgabe, ein thermisch härtbares Bindersystem für den Einsatz als Klebstoff-und Dichtungsmasse zu entwickeln, welches bei Zimmertemperatur mit allen üblichen Auftragsgeräten verarbeitbar ist und gänzlich frei von flüchtigen Lösungsmitteln ist. Lagerbarkeit, Haftung und mechanische Eigenschaften sollen mindestens gleich gut wie die der Massen nach DE-OS 34 02 280 sein.

Diese anspruchsvolle Aufgabe wird durch die wärmehärtbaren Massen nach Anspruch 1 erfüllt.

Die carboxylgruppen-terminierten Polyester a), mit Glasübergangstemperatur unterhalb 20° C, vorzugsweise unterhalb 10° C, und die Polyoxazoline b), mit mindestens 2 Oxazolingruppen je Molekül, vorzugsweise Bisoxazoline, welche unter Polyadditionsbedingungen die Polyester durch Reaktion der Oxazolingruppen mit den Carboxylgruppen ver netzend härten sowie die Paraffine sind allgemein die gleichen Stoffe wie nach DE-OS 34 02 280. Erfindungsgemäß sind als Komponente c) Acryl-oder Methacrylester, vorzugsweise mehrwertiger Alkohole, oder Allylester, vorzugsweise mehrwertiger Carbonsäuren einschließlich der Kohlensäure, enthalten, welche in der Lage sind, unter Aufhebung der Doppelbindung durch vernetzende radikalische Polymerisation, vorzugsweise in Gegenwart von d) Peroxiden oder aliphatischen Azoverbindungen, bei thermischer Initiierung ein Netzwerk aufzubauen. Ggf. sind f) zusätzlich reaktive oder nicht reaktive Verdünnungsmittel und/oder Füllstoffe und/oder Zuschlagstoffe in Mengen von 1 bis 60 Gew.-%, bezogen auf 100 Gew.-% der Komponenten a) bis f), anwesend.

Es war zu erwarten, daß die Reaktivität eines Systems, dessen Funktionsweise darauf beruht, daß die Oxazolingruppe des Vernetzers mit den Carboxylgruppen des Polyesters unbeeinträchtigt zur Reaktion kommen können, durch die Anwesenheit von Acryl-oder Methacrylverbindungen bzw. Allylverbindungen, welche ihrerseits Copolymerisationsreaktionen mit Oxazolinen eingehen können, empfindlich gestört oder unterbunden wird. Denn die von T. Seagusa, et al, (Makromolekuls, 10, 236 (1977) beschriebene Reaktion würde, auf das vorliegende System angewendet, zu einem Verbrauch des Bisoxazolins durch die Acryl-oder Methacrylester führen und die Vernetzung des Polyesters verhindern oder behindern. Andererseits war zu befürchten, daß bei Verwendung des Systems durch Komponente c) und dadurch erleichterte Diffusionsvorgänge und Reaktionsmöglichkeiten, sich Lagerstabilität und Fließfähigkeit der Kleberpasten durch Nachreaktion verschlechtern. Beide Befürchtungen haben sich nicht bestätigt.

Die Härtung der erfindungsgemäßen acrylat-modifizierten Klebemassen verläuft problemlos, beispielsweise unter Härtungsbedingungen, wie für das acrylatfreie System nach DE-OS 34 02 280. Darüberhinaus ist es von großem Vorteil, daß die erfindungsgemäßen die Komponente c) enthaltenden Massen im Falle der Anwesenheit von Initiatoren aus Peroxiden oder Azoverbindungen mit niedrigem Zerfallsbereich ab 60° C bereits bei Temperaturen von 60 bis 90° C in wenigen Minuten vorgelieren und partiell zu einer für konstruktive Zwecke bedeutsamen Anfangsfestigkeit von bis zu 30 % des späteren Endwertes gehärtet werden können. Acrylatfreie Kleber benötigen demgegenüber einige Minuten bei z.B. 140° C für eine gleiche Anfangsfestigkeit.

Obgleich Peroxide bzw. Azoverbindungen vernetzend in das System eingreifen, werden bei Zimmertemperatur fließfähige Massen erhalten.

Im ausgehärteten Zustand weisen die erfindungsgemäßen Massen mit Gehalten der Komponente c) erheblich höhere Klebwerte auf (Zugfestigkeiten s. Tabelle) als die Massen nach DE-OS 34 02 280.

Die Glastemperatur der ausgehärteten Klebermassen als Maß für die Kältefestigkeit der Klebe-oder Dichtungsschichten liegt im Bereich von -25 bis -45° C.

Ein weiterer Vorteil der erfindungsgemäßen Massen ist die deutlich geringere Wasseraufnahme der ausgelierten Klebemassen im feuchten Klima und die dadurch bessere Dimensionsstabilität der Klebung. Während die Wasseraufnahme der ausgehärteten Massen ohne Gehalt der Komponente c) im feuchten Klima (35° C/ 100 % rel. Feuchtigkeit) im Gleichgewichtszustand 7 bis 9 % beträgt, liegt die Wasseraufnahme der erfindungsgemäßen Massen unter gleichen Bedingungen niedriger, im Vorzugsbereich der Komponente c) nur zwischen 2,5 und 5 %.

Die Lagerbeständigkeit der Klebemassen ist gut oder verbessert und beträgt bei Raumtemperatur über 6 Monate. Überraschend ist eine stark verbesserte Beständigkeit der Klebung gegenüber wässrigen Salzlösungen.

Als Polyester-Komponente a) der Klebstoffmassen werden Polykondensate eingesetzt auf der Basis von aromatischen Dicarbonsäuren mit einem aromatischen Ring und/oder aliphatischen Dicarbonsäuren mit 3 bis 12 C-Atomen, Tere-und Isophthalsäure, Glutarsäure, Bernsteinsäure und Adipinsäure, Azelainsäure, Sebacinsäure, Decandicarbonsäure und Dimerfettsäuren (durch Diels-Alder-Reaktion von Linolsäure hergestellt, ggf. hydriert oder partiell hydriert), welche auch größere Mengen an Trimerfettsäure enthalten können oder deren polyesterbildenden Derivaten sowie auf der Basis von aliphatischen oder cycloaliphatischen Diolen wie Äthylenglykol, Diäthylenglykol, Neopentylglykol, Butandiol, Hexandiol, Cyclohexandimethanol, und ggf. dreiwertigen Alkoholen, wie Trimethylolpropan. Bevorzugte Polyester sind Polykondensate auf der Basis von Bernsteinsäure, Glutarsäure, Adipinsäure und Dimerfettsäure oder deren Mischungen als Dicarbonsäurekomponenten und von Äthylenglykol, Diäthylenglykol und Neopentylglykol als Diolkomponenten, mit Glasübergangstemperaturen unterhalb 20° C, bevorzugt unterhalb 10° C. Die vorzugsweise nach dem Verfahren der Schmelzpolykondensation hergestellten, bei Raumtemperatur flüssigen oder halbfesten oder durch Erwärmen bis 90° C in den Schmelzzustand überführbaren Polyester besitzen unmittelbar nach der Synthese überwiegend OH-Endgruppen (Hydroxylzahl-Bereich 10 bis 60, vorzugweise 20 bis 40 mg KOH/g und Säurezahl-Bereich 0 bis 9, vorzugsweise 0 bis 5 mg KOH/g) und besitzen nach dem sog. Aufsäuern mit einem Dicarbonsäureanhydrid, vorzugsweise Trimellithsäureanhydrid, Säurezahlbereiche von 20 bis 120, vorzugsweise 40 bis 80 mg KOH/g. Der Vorgang des Aufsäuerns besteht darin, daß die durch Polykondensation erhaltenen Polyesterkomponenten zwecks Einführung von Carboxylgruppen mit einem Säureanhydrid umgesetzt werden. Dabei reagieren die Hy droxylgruppen des Polyesters mit der Säureanhydridgruppe unter Bildung von Carboxylgruppen. Die Reaktion erfolgt bei höherer Temperatur. Bei der vorliegenden Erfindung kann sie vor oder während der Härtung durchgeführt werden.

Außer dem genannten Trimellithsäureanhydrid können im Rahmen dieser Erfindung zum Aufsäuern auch anderen, gesättigte oder ungesättigte aliphatische, cycloaliphatische oder aromatische Polycarbonsäureanhydride eingesetzt werden, wie z.B. Bernsteinsäure-, Maleinsäure-, Phthalsäure-, Hexahydrophthalsäure-oder Tetrahydrophthalsäureanhydrid.

Die zum Aufsäuern der endständigen Hydroxylgruppen der Polyester mindestens notwendige Menge Trimellithsäureanhydrid (TMSA) wird erfindungsgemäß der durch die Hydroxylzahl des Polyesters gegebenen Menge an OH-Endgruppen stöchiometrisch angepaßt, wobei es sich jedoch im Hinblick auf das Eigenschaftsbild der Klebstoff-und Dichtungsmassen und auch auf deren Härtungsverhalten als vorteilhaft erwiesen hat, einen gegenüber den OH-Endgruppen stöchiometrischen Überschuß an TMSA im Bereich von 1 bis 20, vorzugsweise 5 bis 10, Mol-% einzusetzen, um eine etwas engmaschigere Vernetzung der Massen zu erreichen und um einen sich unter den Reaktionsbedingungen nur unvollständig mit den OH-Gruppen umsetzenden, im verwendeten TMSA ggf. vorhandenen Anteil von einigen Prozent an freier Trimellithsäure auszugleichen. Das Aufsäuern der bei der Synthese bevorzugt als hydroxylendgruppenhaltige Polyester anfallenden Produkte kann in der üblichen Weise durch Zusatz von TMSA unmittelbar nach der Polykondensation im Reaktionsgefäß im Temperaturbereich 100 bis 200° C, vorzugsweise 120 bis 180° C, erfolgen. Es hat sich auch als eine Alternative mit gewissen Vorteilen erwiesen, auf die Durchführung der Reaktion der Hydroxyl-mit den Anhydridgruppen zu verzichten und das TMSA zusammen mit den übrigen Reaktionskomponenten und Zuschlagstoffen dem hydroxylgruppenhaltigen Polyester nur physikalisch zuzumischen. Unter Härtungsbedingungen erfolgt vor, neben der vorbeschriebenen Vernetzungsreaktion (der Carboxyl-mit den Oxazolingruppen), auch die Addition der TMSA an die Hydroxylendgruppen des Polyesters unter Ausbilding der Carboxylgruppen an diesem.

Carboxylgruppen-terminierte Polyester nach beiden Verfahrenswegen ergeben vergleichbar ausgehärtete Endprodukte. Zur Vernetzung der carboxylgruppenhaltigen Polyester werden mehrfunktionelle, vorzugsweise bifunktionelle, Oxazoline verwendet, beispielsweise 1,4-Bis-($\Delta^2$-Oxazolinyl-2-)-benzol = p-Phenylen-bis-oxazolin; 1,3-Bis-($\Delta^2$-oxazolinyl-2-)-benzol = m-Phenylen-bis-oxazolin; 1,2,4-Tris-($\Delta^2$-oxazolinyl-2-)-benzol; Bis-($\Delta^2$-oxazolinyl-2-)-butan = Tetramethylen-bis-oxazolin oder Gemische der genannten mehrfunktionellen Oxazoline. Stark bevorzugt ist das p-Phenylen-bis-oxazolin.

Die Carboxylgruppen der Polyester R-COOH reagieren mit Oxazolingruppen und Addition und Öffnung des Oxazolinringes und Bildung von Esteramidgruppen nach der Formel:

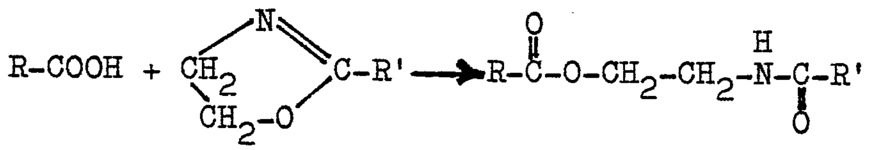 I

worin R' ein beliebiger organischer Rest, vorzugsweise der bi-oder trifunktionelle Rest des Benzols oder von Alkanen mit 3 bis 6 C-Atomen ist.

Die einzusetzende Menge an Bisoxazolin kann im Bereich der aufgrund der Stöchiometrie der Vernetzungsreaktion vorgegebenen Äquivalenz liegen: eine Carboxylgruppe kommt mit einer Oxazolingruppe zur Reaktion.

Im Hinblick auf Härtungsgeschwindigkeit, Aushärtungsgrad, Empfindlichkeit des Systems gegenüber Feuchtigkeit und Zusatzstoffen sowie im Hinblick auf die Endeigenschaften der Klebstoff-und Dichtungsmassen hat es sich jedoch als vorteilhaft erwiesen, einen stöchiometrischen Überschuß an Oxazolingruppen im Bereich 1 bis 30 Mol-%, vorzugsweise 15 bis 25 Mol-%, gegenüber den Carboxylgruppen zu verwenden.

Die Acrylester, Methacrylester oder Alkylester der Komponente c) enthalten vorzugsweise zwei, ggf. drei oder vier der ungesättigten Gruppen pro Molekül. Als Acryl-oder Methacrylester, vorzugsweise merhwertiger Alkohole, können die Bisacrylate oder Bismethacrylate von ω,ω-dihydroxylalkanen der allgemeinen Formel II

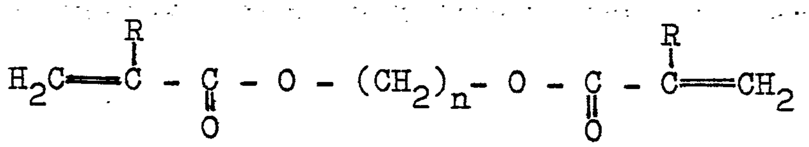 II

eingesetzt werden, in welcher R = H oder der $CH_3$-Rest bedeuten und n = 2 bis 12 ist. Bevorzugt unter den Vertretern der Strukturformel II sind Äthylenglykoldiacrylat oder Äthylenglykoldimethyacrylat, Propandiol-1,3-di-acrylat oder Propandiol-1,3-dimethacrylat, Butandiol-1, 4-diacrylat oder Butandiol-1,4-dimethacrylat, Hexandiol-1,6-diacrylat oder Hexandiol-1,6-dimethacrylat sowie Nonandiol-1,9-diacrylat oder Nonandiol-1,9-dimethacrylat.

Stark bevorzugt sind Butandiol-1,4-diacrylat und Hexandiol-1,6-diacrylat.

Ebenfalls geeignet sind die Diester der (Meth-)acrylsäure mit Oligo-oder Polyalkylenoxiden, d.h., Biester der Di-bis-Polyäthylenglykole bzw. -propylenglykole mit Molgewichten von ca. 80 bis 500, vorzugsweise ca. 80 bis 300.

Eine weitere Gruppe von Bisacrylaten oder Bismethacrylaten leitet sich von äthoxylierten Bisphenolen als Diolkomponenten ab und besitzt die Strukturformel III.

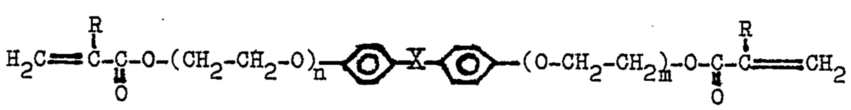 III

in welcher R = Wasserstoff oder eine Methylgruppe bedeuten und X ein 2-wertiger organischer Rest wie vorzugsweise

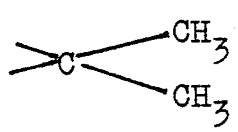

oder ein Heteroatom wie Sauerstoff, Schwefel oder auch eine Gruppe wie

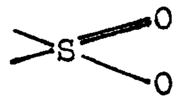

oder $-0-\overset{\overset{O}{\|}}{C}-0-$bedeuten kann. n und m sind ganze Zahlen von 1 bis 30, vorzugsweise 3 bis 20.

Acrylsäure-oder Methacrylsäureester von 2-bis 4-wertigen aliphatischen Alkoholen, wie beispielsweise die Acrylate oder Methacrylate des Trimethylopropan oder des Pentaerythrit können vorzugsweise im Gemisch mit den vorgenannten Acrylaten oder Methacrylaten der 2-wertigen Alkohole verwendet werden. Als Bisallylester mehrwertiger Dicarbonsäuren eignen sich allein oder zusammen mit den genannten (Meth-)-acrylaten z.B. solche von aromatischen Dicarbonsäuren wie Phthalaten, Iso-oder Terephthalaten, Cyclohexandi-bzw. tricarbonsäuren oder aliphatischen Dicarbonsäuren mit 2 bis 12 C-Atomen sowie der Kohlensäure. Bevorzugt sind Diallylphthalat und Diallylcarbonat.

Ein Teil der Komponente c), vorzugsweise 0 bis zur Hälfte vom Gewicht der Komponente c), kann aus Monoacrylaten oder Monomethacrylaten von mehrwertigen Alkoholen mit 2 bis 12 C-Atomen oder (Meth-)Acrylaten einwertiger, geradkettiger oder verzweigter aliphatischer der cycloaliphatischer Alkohole mit 2 bis 20 C-Atomen oder Mono-und Diester ungesättigter $C_3$-bis $C_8$-Dicarbonsäuren, wie Fumarsäure, mit diesen Alkoholen bestehen. Dadurch kann z.B. Elastizität und Härte der ausgehärteten Massen den jeweiligen Erfordernissen angepaßt werden. Bevorzugte Acrylate oder Methacrylate einwertiger Alkohole sind die-äthylester bis -hexylester, -2-äthylhexylester bzw. -cyclohexylester bzw. -nonylester bis -cetylester und als Mono-(meth-)acrylate von Diolen die von Propandiol bis Hexandiol.

Die Stoffe der Komponente c) können thermisch bei Härtung vernetzt werden, jedoch ist die Vernetzung durch Zusatz von Initiatoren bzw. Radikalbildnern d) bevorzugt. Als Initiatoren zur radikalischen Polymerisation der Acryl-oder Methacrylester oder der Allylester sind Radikalbildner an sich bekannter Art geeignet, insbesondere Peroxide oder aliphatische Azoverbindungen. Aus Gründen der Lagerstabilität der Kleberpasten bei Raumtemperatur sind Initiatoren bevorzugt, welche Radikale bei Temperaturen von 70° C bis 180° C bilden. Es kann jedoch von Vorteil sein, Initiatoren mit Zerfallstemperaturen von 60 bis 80° C zu verwenden, um erhöhte Anfangsfestigkeiten zu erhalten. In diesem Falle können zwei Initiatoren mit unterschiedlicher Zerfallstemperatur verwendet werden, z.B. ein Peroxid zur Vorgelierung bei 70 bis 90° C im Gemisch mit einem Peroxid von höherer Zerfallstemperatur zur Vervollständigung der radikalischen Vernetzungs temperatur im Temperaturbereich von 140 bis 180° C.

Die Einarbeitung von 0 bis 4 Gew.-%, vorzugsweise 1 bis 3 Gew.-% Paraffin e) bewirken z.B. bei Klebermischungen, die längere Zeit der Atmosphäre ausgesetzt sind, ausgezeichnete Härtung. Zuschlag-bzw. Füllstoffe f) sind z.B. Talkum, Schwerspat, Kreide, Ruß o. dgl. in feiner Verteilung. Als nicht reaktive Verdünnungsmittel haben sich z.B. flüssige Cumaron/Inden-Harze oder Weichmacher von Esterstruktur, besonders Phthalate wie Dioctylphthalat oder hochsiedende Fraktionen von besonders aromatischen Kohlenwasserstoffen oder Polyglykole wie z.B. Tripropylenglykol oder Polyäthylenglykol mit Molmassen unter 1.000 bewährt.

Als reaktive Verdünnungsmittel dienen z.B. aufgesäuerte Verbindungen von Polyolcharakter, beispielsweise Reaktionsprodukte von einem Säureanhydrid, wie Trimellithsäureanhydrid mit Polyäthylenglykolen oder Reaktionsprodukte des TMSA mit hydroxylgruppen-terminierten Oligomeren oder Polymeren bzw. Copolymeren des Butadien oder flüssige Verbindungen, die von Natur aus Dicarbonsäuren darstellen, wie beispielsweise die aus ungesättigten Fettsäuren erhaltenen Dimerfettsäurean, welche als Verdünnungsmittel wirken und durch ihre Carboxylfunktion am Vernetzungsvorgang teilnehmen.

Die Herstellung der pastenförmigen Klebstoff-und Dichtungsmassen erfolgt in an sich bekannter Weise durch Vermischen der Komponenten, vorzugsweise in Knetwerken oder Walzenstühlen. Die Härtung erfolgt bei Temperaturen oberhalb 100° C, vorzugsweise im Temperaturbereich von 120 bis 180° C. Die Härtungszeit liegt im Bereich von 10 min. bis 1 h. Eine Temperaturbelastung von einigen Stunden oberhalb 180° C bis zu 2 Stunden bei 240° C beeinträchtig die Qualität der Verklebung oder Abdichtung nicht

Beispiel 1 (Polyester)

Zur Herstellung eines Polyesters a) mit tiefer Glastemperatur werden in ein mit Rührer, Stickstoff-Einleitungsrohr und einem (alternativ nutzbaren) Dephlegmator bzw. einem absteigenden Kühlsystem ausgestattetes heizbares Metallgefäß die nachstehenden Kondensationskomponenten eingewogen:

6.862 g Adipinsäure (47 Mol)
1.692 g Dimerfettsäure[1)] (3 Mol)
2.886 g Äthylenglykol (46,5 Mol)
1.325 g Diäthylenglykol (12,5 Mol)

Unter Rühren und Überleiten eines schwachen Stickstoffstromes wird unter Benutzung des Weges über den Dephlegmator (Temp. = 110° C) das Reaktionsgemisch aufgeheizt und jeweils 1 h bei 180, 200 und 220° C unter Abdestillieren des Reaktionswassers verestert.
Dann werden 10,4 g Triphenylphosphit als Antioxidans zugesetzt und nach einer weiteren Std. bei 240° C auf das absteigende Kühlsystem (kurzer Weg) umgestellt.
Nach Zusatz von 5,2 Octylenglykoltitanat (Gehalt 0,05g pro g Octylenglykoltitanat) als Kondensationskatalysator wird die Temperatur auf 250° C gesteigert und das Vakuum innerhalb 1 h auf 1 mbar abgesenkt.
Es wird polykondensiert, bis die nachstehenden Kenndaten erreicht sind:

$\eta$ sp/$_c$ (reduzierte spez. Viskosität = 0,25 dl/g
SZ[2)] = 0,3 mg KOH/g
OHZ[2)] = 31 mg KOH/g

1)Dimerfettsäure ist ein durch Diels-Alder-Reaktion aus Linolsäure hergestelltes Produkt mit der mittleren Molmasse 564; sie besitzt zu >85 Gew.-% Dicarbonsäurecharakter, enthält 10 bis 12 Gew.-% Tricarbonsäureanteil und 1 bis 2 Gew.-% Monocarbonsäureanteil.
2) SZ = Säurezahl OHZ = Hydroxylzahl

Nach Abkühlen der Masse auf 180° C werden zwecks Umwandlung von endständigen Hydroxylgruppen in Carboxylgruppen 1.330 g Trimellithsäureanhydrid zugegeben und im Temperaturbereich 170 bis 180° C gerührt. Dann werden carboxylgruppen-terminiertes Polyester mit den Kenndaten

$\eta$ sp/$_c$ = 0,26 dl/g
SZ = 56 mg KOH/g
OHZ < 1 mg KOH/g
Glastemp. = -34° C

aus dem Reaktionsgefäß abgelassen.

Beispiel 2 (Polyester)

Ein weiterer carboxylgruppen-terminierter Polyester mit tiefer Glastemperatur wird entsprechend der Verfahrensweise von Beispiel 1 mit den nachstehenden Reaktionskomponenten hergestellt:

6.392 g aliph. Dicarbonsäuregemisch [2)] (ca. 47 Mol)
1.692 g Dimerfettsäure[1)] ( 3 Mol)
2.886 g Äthylenglykol ( 46,5 Mol)
1.300 g Neopentylglykol ( 12,5 Mol).

Unter den Bedingungen von Beispiel 1 wird unter Zusatz von 10,4 g Triphenylphosphit als Antioxidans und 5,2 g Octylenglykoltitanat als Polykondensationskatalysator ein PES hergestellt mit den Kenndaten:

$\eta$ sp/$_c$ = 0,28 dl/g
SZ = 0,4 mg KOH/g
OHZ = 25 mg KOH/g

2) Das Dicarbonsäuregemisch besitzt die Zusammensetzung 28 bis 33 Gew.-% Bernsteinsäure, 40 bis 45 Gew.-% Glutarsäure und 24 bis 28.-% Adipinsäure.

Nach der Umsetzung mit 1.100 g Trimellithsäureanhydrid bei 170 bis 180° C wird ein carboxylgruppen-terminierter Polyester erhalten mit den Kenndaten:

$\eta$ sp/$_c$ = 0,29 dl/g
SZ = 46 mg KOH/g
OHZ < 1 mg KOH/g
Glastemp. = -29° C.

Vergleichsbeispiele sowie Beispiel 3 bis 28

Zur Herstellung der Kleberpasten der Vergleichsbeispiele A bis H sowie der Beispiele 3 bis 28 werden die in den Tabellen 1 bis 3 angegebenen Gewichtsmengen der Komponenten derart gemischt, daß in einem evakuierbaren und heizbaren Planetenmischer der carboxylgruppen-terminierten Polyester sowie das Paraffin vorgelegt werden und unter Evakuieren der Mischkammer und Aufheizen auf 65 bis 70° C intensiv vermischt werden. Unter Rühren der Masse wird auf 35° C abgekühlt. Nach Abstellen des Rührwerks und nach Belüften der Mischkammer werden die weiteren, in den Tabellen aufgeführten Komponenten zugesetzt und nach Evakuieren der Mischkammer und Einschalten des Rührwerks im Temperaturbereich 20 bis 40° C bis zur völligen Homogenisierung der Kleberpaste vermischt.

Die in den Tabellen genannten Eigenschaften wurden wie folgt ermittelt:

1. Pastenfließfähigkeit:

a) halbquatitativ durch die Beurteilung der Verarbeitungsverhaltens beim Aufstreichen der Paste auf die Stahlbleche,

b) quantitativ die Auslaufmenge bzw. die Fließgeschwindigkeit bei 23° C aus einer gefüllten Kartusche unter einer Druckbelastung des Kolbens von 5.000 g senkrecht nach unten aus einer Düse von 4 mm Durchmesser.

2. Die Lagerstabilität der Kleberpasten bei Raumtemperatur (im Sinne der Vermeidung einer vorzeitigen Vernetzung) durch Vergleich der Gelzeiten bei 120° C: eine Stunde nach der Pastenherstellung, 30 Tage und 60 Tage nach der Herstellung der Kleberpaste.

3. Zugscherfestigkeit in $N/cm^2$ nach Härtung: zur Verklebung wird nicht entfettetes Stahlblech (St 37) mit der Paste (Schichtstärke 0,8 mm, Klebfläche 5 $cm^2$) bestrichen und ein zweites gleiches Stahlblech - (Überlappungs breite 20 mm, Überlappungslänge 25 mm) aufgebracht. Die Härtung erfolgt in einem Umluftofen 28 min. bei 180° C. Die Zugscherfestigkeit wurde bei 23° C und einer Abzuggeschwindigkeit von 50 mm/min. gemessen.

4. Zugscherfestigkeit $N/cm^3$ nach Klimawechsel: die Beständigkeit der Verklebung im Klimawechseltest wurde an, wie unter 3, gehärteten, verklebten Stahlblechen im Wechsel der Temperatur von +80° C mit 80 % rel. Luftfeuchte und der Temperatur von -40° C (vier Zyklen jeweils vier Std.) geprüft.

5. Enthaftung der Kleberschicht im Salzsprühtest: auf ein Stahlblech wird eine Kleberschicht (1mm stark, 15 mm breit und 50 mm lang) aufgebracht und wie unter 3 gehärtet. Dieses Stahlblech wird in einer Prüfkammer bei 35° C mit einer Lösung aus 50 g Kochsalz in 1.000 $cm^3$ Wasser 8 Tage lang besprüht - (Stahlblech vertikal, Sprühwinkel 20°). Gemessen wird der Abstand vom Rand in mm, auf dem der Kleber vom Blech gelöst bzw. enthaftet wurde (Unterwanderung).

6. Wasseraufnahme der gehärteten Kleberschicht: Probekörper wie nach 5, wurden in einem Klimaschrank 5 Tage lang einer Atmosphäre von 100 % relativer Luftfeuchte bei 35° C ausgesetzt. Gemessen wird der Wassergehalt in % der Kleberschicht.

Tabelle 1

| Mengenangaben der Komponenten sind Gew.-Teile | A | B | C | D | Beispiele 3 | 4 | 5 | 6 | 7 | 8 | 9 | 10 |
|---|---|---|---|---|---|---|---|---|---|---|---|---|
| Polyester, COOH-term. nach Beisp. 1 | 48 | 48 | 45 | 46 | 48 | 48 | 48 | 46 | 45 | 45 | 43 | 38 |
| Paraffin, Erstarr.-P. 56 bis 58° C | 1 | 1 | 1 | 1 | 1 | 1 | 1 | 1 | 1 | 1 | 1 | 1 |
| m-Phenylenbisoxazolin | 6 | - | - | - | 6 | - | - | - | - | - | - | - |
| p-Phenylenbisoxazolin | - | 6 | 5 | 6 | - | 6 | 6 | 6 | 5 | 5 | 5 | 5 |
| Dioctylphthalat | 10 | 10 | 4 | 7 | - | - | - | - | - | - | - | - |
| Kreide | 35 | 35 | - | - | 35 | 35 | 35 | 35 | 35 | 35 | - | - |
| Talkum | - | - | - | 40 | - | - | - | - | - | - | 40 | - |
| Schwerspat | - | - | 45 | - | - | - | - | - | - | - | - | 45 |
| Butandiol-diacrylat | - | - | - | - | 9 | 9 | - | - | - | - | 10 | 10 |
| Butandiol-dimethacrylat | - | - | - | - | - | - | 9 | - | - | - | - | - |
| Triäthylenglykol-dimethacr. | - | - | - | - | - | - | - | 11 | - | - | - | - |
| Trimethylolprop.-trimethacm | - | - | - | - | - | - | - | - | 13 | - | - | - |
| Diallylphthalat | - | - | - | - | - | - | - | - | - | 13 | - | - |
| Peroxid; Dicumylperoxid | - | - | - | - | 1 | 1 | 1 | 1 | 1 | 1 | 1 | 1 |
| 1. Pastenfließfähigkeit | | | | | | | | | | | | |
| a) Verarbeitungsverhalten | 1) | 1) | 1) | 1) | 2) | 2) | 2) | 2) | 2) | 1-2) | 2) | 2) |
| b) Auslaufmenge g/30min. | 0 | 0 | 0 | 0 | 68 | 64 | 53 | 44 | 36 | 55 | 60 | 34 |
| 2. Lagerstabilität d. Paste | | | | | | | | | | | | |
| Gelzeit 120°C/Std. nach Herstellung | 740" | 638" | 580" | 620" | 640" | 620" | 680" | 660" | 720" | 630" | 635" | 645" |
| Gelz. 120°C/30Tage n.H. | 738" | 630" | 570" | 620" | 645" | 630" | 675" | 660" | 725" | 635" | 630" | 645" |
| " 120°C/60Tage n.H. | 730" | 632" | 570" | 610" | 635" | 610" | 675" | 650" | 725" | 640" | 630" | 640" |
| 3. Zugscherfestigkeit N/cm² (nach Härtung) | 190 | 245 | 280 | 250 | 310 | 420 | 390 | 295 | 710 | 350 | 430 | 400 |
| 4. Zugscherfestigkeit (Klimawechsel) | 165 | 210 | 270 | 230 | 295 | 415 | 370 | 280 | 700 | 340 | 425 | 385 |
| 5. Enthaftung im Salzsprühtest | 3) | 3) | 3) | 3) | 4) | 4) | 4) | 5) | 4) | 5) | 4) | 4) |
| 6. Wasseraufnahme der Schicht (Gew.-%) | 7,6 | 7,2 | 6,3 | 6,8 | 3,8 | 3,2 | 2,8 | 4,3 | 2,5 | 4,5 | 3,2 | 3,0 |

1) bei Raumtemperatur knetbar; beim Andrücken der Paste gegen die Stahloberfläche keine Haftung;
2) bei Raumtemperatur fließfähig; haftet beim Auftragen oder Andrücken auf der Stahloberfläche;
3) völlige Unterwanderung; totale Enthaftung der Klebeschicht;
4) 1 bis 2 mm Unterwanderung
5) 2 bis 3 mm Unterwanderung; partielle Enthaftung der Klebeschicht;

A bis D = Vergleichsbeispiele

Tabelle 2

| Die Mengenangaben der Komponenten sind Gew.-Teile | Vergleichsb. E | F | Beispiele 11 | 12 | 13 | 14 | 15 | 16 | 17 | 18 | 19 |
|---|---|---|---|---|---|---|---|---|---|---|---|
| Polyester, COOH-term., nach Beispiel 2 | 45 | 45 | 40 | 42 | 40 | 40 | 39 | 40 | 40 | 39 | 41 |
| Paraffin, Erstarr.P. 56 bis 58°C | 1 | 1 | 1 | 1 | 1 | 1 | 1 | 1 | 1 | 1 | 1 |
| p-Phenylenbisoxazolin | 5 | 5 | 4,5 | 5 | 4,5 | 4,5 | 4,5 | 4,5 | 4,5 | 4,5 | 4,5 |
| Dioctylphthalat | 11 | - | 7 | 8 | 7 | - | - | 7 | - | - | - |
| Dioctyladipat | - | 11 | - | - | - | 5 | - | - | 5 | - | - |
| Kreide | 38 | 38 | 38 | 38 | 38 | 38 | 38 | 38 | 38 | 38 | 38 |
| Äthylenglykol-diacrylat | - | - | 8 | - | - | - | - | - | - | - | - |
| Butandiol-diacrylat | - | - | - | 5 | 8 | 10 | 16 | - | - | - | - |
| Butandiol-dimethacrylat | - | - | - | - | - | - | - | 8 | 10 | - | - |
| Polyäthylenglykol 200-dimethacrylat Molgewicht 200 | - | - | - | - | - | - | - | - | - | 15 | - |
| Äthoxyliertes Bisphenol A-dimethacr. Formel II n=m=8 -12, Handelsname Diacryl 103[R] der Akzo | - | - | - | - | - | - | - | - | - | - | 14 |
| Peroxid:3,3,6,6,9,9-Hexamethyl-cyclo-1,2,4,5-tetraoxanonan(als 50%ige Mischung im Kieselgel) | - | - | 1,5 | 1 | 1,5 | 1,5 | 1,5 | 1,5 | 1,5 | 2,5 | 1,5 |
| 1. Pastenfließfähigkeit | | | | | | | | | | | |
| a) Verarbeitungsverhalten | 1) | 1) | 2) | 2) | 2) | 2) | 2) | 2) | 2) | 2) | 2) |
| b) Auslaufmenge g/30 min. | 0 | 0 | 46 | 39 | 52 | 82 | 144 | 43 | 71 | 42 | 47 |
| 2. Lagerstabilität der Paste | | | | | | | | | | | |
| Gelzeit b.120°C/Std.nach Herst. | 660" | 645" | 675" | 665" | 650" | 655" | 665" | 640" | 645" | 670" | 680" |
| " " " /30 Tage n.H. | 650" | 640" | 680" | 660" | 660" | 650" | 660" | 630" | 645" | 660" | 675" |
| " " " /60 Tage n.H. | 650" | 635" | 675" | 665" | 655" | 645" | 660" | 630" | 640" | 665" | 670" |
| 3. Zugscherfestigkeit ($N/cm^2$) (Härtungsbedingungen:S.16,Punkt3) | 380 | 360 | 390 | 440 | 485 | 520 | 560 | 450 | 490 | 400 | 410 |
| 4. Zugscherfestigkeit n.Klimawechseltest ($N/cm^2$) | 360 | 320 | 380 | 435 | 480 | 510 | 560 | 440 | 485 | 360 | 385 |
| 5. Enthaftung im Salzsprühtest | 3) | 3) | 5) | 5) | 4) | 4) | 4) | 4) | 4) | 5) | 5) |
| 6. Wasseraufnahme der Klebeschicht (%) | 7,2 | 7,8 | 5,8 | 5,0 | 4,6 | 4,2 | 3,0 | 4,1 | 2,8 | 4,8 | 4,6 |

Bewertungen 1) bis 5) wie in Tabelle 1
E und F = Vergleichbeispiele

Tabelle 3

| Die Mengenangaben der Komponenten sind Gew.-Teile | G | H | 20 | 21 | 22 | 23 | 24 | 25 | 26 | 27 | 28 |
|---|---|---|---|---|---|---|---|---|---|---|---|
| | | | | | Beispiele | | | | | | |
| Polyester, COOH-term. nach Beispiel 2 | 39 | 39 | 39 | 39 | 39 | 39 | 39 | 39 | 39 | 39 | 39 |
| Paraffin, Erstarr.-P. 56 bis 58°C | 1 | 1 | 1 | 1 | 1 | 1 | 1 | 1 | 1 | 1 | 1 |
| p-Phenylenbisoxazolin | 4 | 4 | 4,5 | 4,5 | 4 | 4,5 | 4,5 | 4,5 | 4,5 | 4,5 | 4,5 |
| Dioctylphthalat | 23 | 11 | 10 | 7 | - | 7 | - | 12 | 12 | 10 | 7 |
| Kreide | 33 | - | 33 | 33 | 35 | - | - | 33 | 33 | 33 | 33 |
| Talkum | - | - | - | - | - | 40 | - | - | - | - | - |
| Schwerspat | - | 45 | - | - | - | - | 45 | - | - | - | - |
| Diallylphthalat | - | - | 10 | - | - | - | - | - | - | - | - |
| Trimethylolprop.-trimethacrylat | - | - | - | 5 | - | - | - | - | - | - | - |
| Trimethylolprop.-triacrylat | - | - | - | - | 20 | - | - | - | - | - | - |
| Butandiol-diacrylat | - | - | - | - | - | 8 | 10 | - | - | - | - |
| Neopentylglykol-dimethacrylat | - | - | - | - | - | - | - | 10 | - | - | - |
| Hexandiol-diacrylat | - | - | - | 10 | - | - | - | - | 10 | 7 | - |
| Tripropylenglykol-diacrylat | - | - | - | - | - | - | - | - | - | - | 15 |
| Butandiol-monoacrylat | - | - | - | - | - | - | - | - | - | 5 | - |
| Peroxid: 2,5-dimethyl-2,5-di(tert.-butylperoxy)-hexin-3 | - | - | 2,5 | 0,5 | 1 | 0,5 | 0,5 | 0,5 | 0,5 | 0,5 | 0,5 |
| 1. Pastenfließfähigkeit | | | | | | | | | | | |
| a) Verarbeitungsverhalten | 2) | 1) | 2) | 2) | 2) | 2) | 2) | 2) | 2) | 2) | 2) |
| b) Auslaufmenge g/30 min. | 40 | 0 | 89 | 112 | 123 | 62 | 64 | 49 | 79 | 96 | 52 |
| 2. Lagerstabilität der Paste | | | | | | | | | | | |
| Gelzeit b. 120°C/Std. n.Herst. | 830" | 760" | 680" | 605" | 600" | 620" | 630" | 675" | 640" | 645" | 690" |
| " " " /30 Tage n.H. | 820" | 755" | 680" | 600" | 600" | 620" | 625" | 670" | 640" | 645" | 675" |
| " " " /60 Tage n.H. | 810" | 750" | 675" | 590" | 590" | 625" | 620" | 670" | 635" | 635" | 685" |
| 3. Zugscherfestigkeit $N/cm^2$ Härtungsbed. S.16, Punkt 3 | 180 | 270 | 340 | 490 | 745 | 360 | 460 | 435 | 450 | 340 | 355 |
| 4. Zugscherfestigkeit nach Klimawechseltest $N/cm^2$ | 165 | 260 | 330 | 485 | 735 | 345 | 455 | 425 | 450 | 320 | 335 |
| 5. Enthaftung im Salzsprühtest | 3) | 3) | 5) | 4) | 4) | 4) | 4) | 4) | 4) | 5) | 5) |
| 6. Wasseraufnahme der Klebeschicht (%) | 7,4 | 6,9 | 5,6 | 2,9 | 2,6 | 3,3 | 2,8 | 2,7 | 2,6 | 3,1 | 3,4 |

Bewertungen 1) bis 5) wie Tabelle 1
G und H = Vergleichsbeispiele

## Ansprüche

1. Wärmehärtbare Klebstoff-und Dichtungsmassen, bestehend aus

a) 20 bis 60 Gew.-%, vorzugsweise 25 bis 55 Gew.-%, carboxylgruppen-terminierten Polyestern mit einer Glasübergangstemperatur unterhalb 20° C,

b)2,0 bis 12 Gew.-%, vorzugsweise 3 bis 8 Gew.-% Polyoxazolinen, welche mindestens 2 Oxazolingruppen je Molekül enthalten, wobei die Polyoxazoline in den Polyestern suspendiert sind,

c) 2 bis 40 Gew.-%, vorzugsweise 3 bis 30 Gew.-% Acryl-oder Methacrylester, vorzugsweise mehrwertiger Alkohole und/oder Allylester mehrwertiger Carbonsäuren einschließlich der Kohlensäure, ggf. in Form von Gemischen dieser Verbindungen,

d) 0 bis 5 Gew.-%, vorzugsweise 0,2 bis 3 Gew.-% Peroxiden oder aliphatischen Azoverbindungen als Radikalbildnern,

e) 0 bis 4 Gew.-%, vorzugsweise 0,5 bis 2 Gew.-%, Paraffin und ggf. zusätzlich

f) 1 bis 60 Gew.-%, vorzugsweise 1 bis 50 Gew.-%, bezogen auf die Gesamtmenge der Bestandteile, reaktiven oder nicht reaktiven Verdünnungsmitteln und/oder Zuschlagstoffen.

2. Wärmehärtbare Klebstoff-und Dichtungsmassen nach AnSpruch 1, **dadurch gekennzeichnet**, daß die Komponente a) aus Polyestern besteht, welche im statistischen Mittel mindestens 2 Carboxylgruppen je Molekül enthalten, Säurezahlen von 20 bis 120, vorzugsweise 30 bis 70 mg KOH/g aufweisen.

3. Wärmehärtbare Klebstoff-und Dichtungsmassen nach Anspruch 1, dadurch gekennzeichnet, daß als Polyoxazoline p-Phenylenbisoxazolin, m-Phenylenbisoxazolin oder Tetramethylenbisoxazolin einzeln oder im Gemisch eingesetzt werden.